# FASCICULE DE BREVET EUROPEEN

(11) **EP 1 119 728 B1**
(45) Date de publication et mention de la délivrance du brevet: **11.05.2005**
(21) Numéro de dépôt: 99969784.0
(22) Date de dépôt: 23.09.1999
(51) Int. Cl.: F24F 12/00, F28D 9/00

(54) **UNITE INDEPENDANTE D'ECHANGE DE CHALEUR, EN PARTICULIER POUR LA VENTILATION D'UN BATIMENT**
WÄRMETAUSCHER, INSBESONDERE FÜR DIE BELÜFTUNG VON GEBÄUDEN
HEAT EXCHANGE UNIT, IN PARTICULAR FOR VENTILATING A BUILDING

(30) Priorité: 25.09.1998 FR 9812028
(43) Date de publication de la demande: 01.08.2001
(73) Titulaire: MASA-THERM S.A., 2043 Boudevilliers (CH)
(72) Inventeur: RYLEWSKI, Eugeniusz, F-78470 Saint Rémy les Chevreuse (FR)
(74) Mandataire: Bezault, Jean
(86) Numéro de dépôt international: PCT/FR1999/002266
(87) Numéro de publication internationale: WO 2000/019151

(56) Documents cités:
- EP-A- 0 368 477
- WO-A-91/04451
- DE-A- 2 523 151
- DE-A- 4 007 963
- US-A- 3 814 172
- US-A- 4 040 804

## Description

L'invention concerne une unité indépendante d'échange de chaleur propre à être placée à l'intérieur d'un bâtiment pour assurer par exemple la ventilation et/ou la climatisation d'une pièce ou d'un local à l'intérieur de ce bâtiment.

Elle concerne plus particulièrement une unité indépendante d'échange de chaleur qui comprend un boîtier muni de parois délimitant deux passages de fluide ayant une section de forme ondulée et des moyens de circulation d'air propres à faire circuler à contre-courant dans les deux passages de fluide, d'une part un flux d'air neuf prélevé à l'extérieur du bâtiment, et d'autre part un flux d'air vicié prélevé à l'intérieur du bâtiment.

Une unité indépendante de ce type est décrite dans le Brevet français n° 86 17714.

Cette unité connue permet d'assurer la ventilation et/ou la climatisation d'une pièce ou d'un local à l'intérieur d'un bâtiment en échangeant de la chaleur entre un fluide primaire et un fluide secondaire, à savoir respectivement de l'air neuf prélevé à l'extérieur du bâtiment et de l'air vicié prélevé à l'intérieur du bâtiment.

L'air neuf ou extérieur introduit dans le bâtiment peut être, selon les cas, refroidi ou réchauffé par l'air vicié intérieur destiné à être rejeté au dehors du bâtiment. La ventilation du local ou de la pièce s'effectue ainsi sans provoquer de changements notables de température à l'intérieur du bâtiment.

Dans cette unité connue, les deux passages de fluide encore appelés canaux, formés à l'intérieur du boîtier, sont séparés par une paroi ondulée, généralement une paroi métallique, qui ne se prête pas toujours à un nettoyage facile.

L'invention vise notamment à procurer une unité indépendante d'échange de chaleur du type précité qui utilise d'autres matériaux facilitant le nettoyage, qui peut être réalisée de manière simple et à moindre coût et qui peut offrir différents modes de fonctionnement avec ou sans récupération de chaleur définie par le l'objet de la revendication 1.

Ainsi, la séparation entre les deux passages de fluide, encore appelés canaux, est obtenue par une feuille souple formant des plis.

Cette feuille souple présente l'avantage d'être légère, de pouvoir être enlevée et nettoyée facilement, par exemple par simple lavage, ou de pouvoir être facilement échangée contre une feuille neuve.

En outre, du fait de son caractère souple, ses plis sont déformables, de sorte que les sections de passage offertes respectivement par les deux passages de fluide peuvent se modifier en fonction des débits respectifs du flux d'air neuf et du flux d'air vicié.

De façon avantageuse, la feuille est réalisée en un matériau étanché à l'air, tel qu'un tissu, un non-tissé, une matière plastique, du papier et analogues.

Ce matériau peut être étanche à la vapeur d'eau, si l'on ne souhaite pas d'interaction entre les deux flux d'air, ou bien perméable à la vapeur d'eau, ce qui permet alors de restituer une partie de la vapeur d'eau contenue dans l'air vicié évacué vers l'extérieur du bâtiment.

Selon encore une autre caractéristique de l'invention, le boîtier est de forme générale allongée, et les plis de la feuille souple ont des génératrices sensiblement parallèles et s'étendant dans le sens de la longueur du boîtier.

Dans une forme de réalisation préférée, le boîtier est disposé verticalement et les génératrices des plis sont sensiblement verticales.

En ce dernier cas, lorsque le boîtier est à disposition générale verticale, les deux ventilateurs d'évacuation sont disposés respectivement en partie supérieure et en partie inférieure du boîtier.

On peut alors prévoir que l'unité comprenne deux échangeurs de chaleur associés respectivement aux deux ventilateurs d'évacuation et comprenant chacun une feuille souple délimitant deux passages de fluide.

Dans la description qui suit, faite à titre d'exemple, on se réfère aux dessins annexés, sur lesquels :
- la figure 1 est une vue de face d'une unité d'échange de chaleur selon l'invention appliquée contre un mur à l'intérieur d'un bâtiment ;
- la figure 2 est une vue en coupe selon la ligne II-II de la figure 1 ;
- la figure 3 est une vue en coupe, à échelle agrandie, selon la ligne III-III de la figure 1 ;
- la figure 4 est une représentation schématique analogue à la figure 1 dans un mode de fonctionnement ;
- la figure 5 est une vue en coupe selon la ligne V-V de la figure 4 ;
- la figure 6 est une vue en coupe selon la ligne VI-VI de la figure 4 ;
- la figure 7 est une vue en coupe selon la ligne VII-VII de la figure 4 ;
- la figure 8 est une vue analogue à la figure 4 dans un autre mode de fonctionnement ;
- la figure 9 est une vue en coupe selon la ligne IX-IX de la figure 8 ;
- la figure 10 est une vue en coupe selon la ligne X-X de la figure 8 ; et
- la figure 11 est une vue en coupe selon la ligne XI-XI de la figure 8.

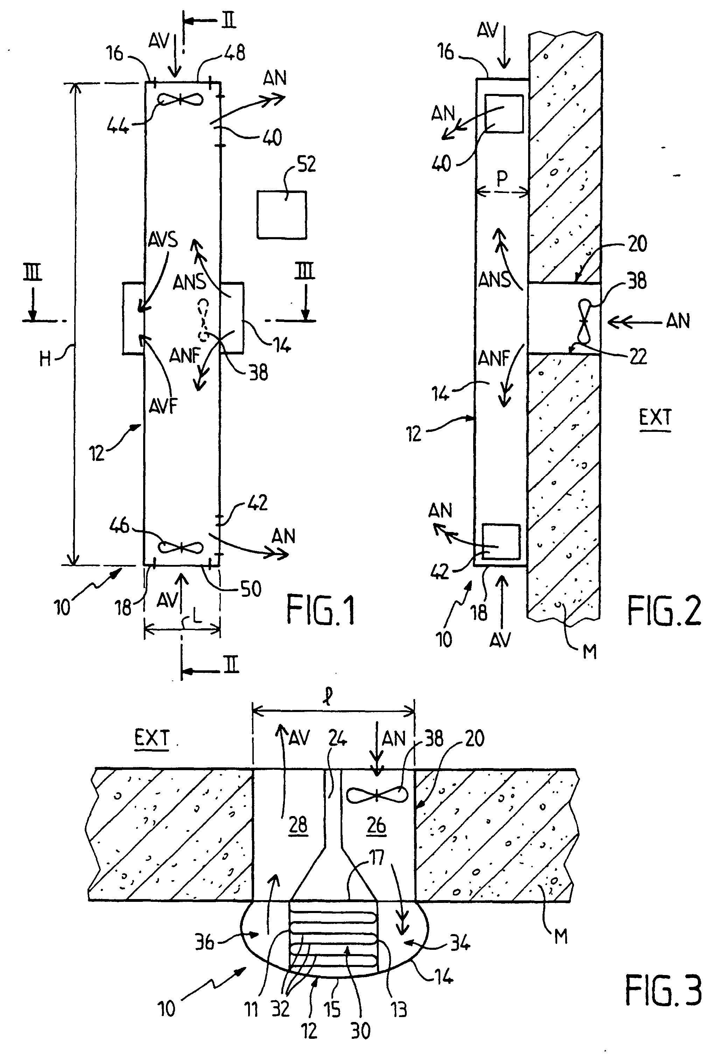

On se réfère tout d'abord aux figures 1 à 3 qui représentent une unité indépendante d'échange de chaleur 10 destinée à être placée à l'intérieur d'un bâtiment en étant appliquée contre un mur M de ce dernier.

Cette unité 10 se présente sous la forme d'un boîtier 12 de forme générale oblongue qui peut présenter, par exemple, une hauteur H de l'ordre de 200 cm, une largeur L de l'ordre de 30 cm et une profondeur P de l'ordre de 15 cm.

Dans l'exemple, le boîtier 12 s'étend dans une direction générale verticale et il est délimité par deux parois latérales 11 et 13, une paroi antérieure 15, une paroi postérieure 17, une paroi supérieure 16 et une paroi inférieure 18 (figure 3). De plus le boîtier est délimité à mi-hauteur par une paroi enveloppante 14 en saillie de part et d'autre des parois latérales pour former un élargissement local.

Le boîtier 12 est prolongé latéralement, dans sa partie centrale correspondant à la paroi enveloppante 14, par un conduit 20 formant gaine et destiné à traverser le mur M et à déboucher vers l'extérieur EXT du bâtiment (figures 2 et 3). Le conduit 20, qui fait partie intégrante du boîtier 12, est introduit à cet effet dans une ouverture 22 préalablement aménagée dans l'épaisseur du mur M.

Le conduit 20 a ici une section carrée définie par des côtés de longueur 1, avec 1 supérieure à L, et il est divisé par une cloison 24 en deux conduits 26 et 28. Le conduit 26 est destiné à faire admettre dans le boîtier 12 un flux d'air neuf AN (air extérieur) prélevé à l'extérieur du bâtiment. Le conduit 28 est propre à évacuer vers l'extérieur un flux d'air vicié AV (air intérieur) prélevé dans le boîtier 12 et provenant de l'intérieur du bâtiment.

A l'intérieur du boîtier 12 est placée une feuille souple et mince 30 formant des plis 32 à la manière d'un rideau ou analogue. Ces plis ont ici des génératrices sensiblement parallèles entre elles et s'étendant dans le sens de la longueur du boîtier. Autrement dit, ces génératrices sont sensiblement verticales. La feuille 30 est destinée à former une cloison d'échange de chaleur en délimitant, d'un côté un passage de fluide 34 communiquant avec le conduit 26 pour la circulation du flux d'air neuf AN et, de l'autre côté, un passage 36 en communication avec le conduit 28 pour la circulation du flux d'air vicié AV. Ces passages 34 et 36 permettent une circulation à contre-courant des deux flux d'air, qui constituent respectivement un flux primaire et un flux secondaire, pour permettre un échange de chaleur entre eux. La feuille 30 est réalisée dans un matériau étanche à l'air qui peut être par exemple une feuille de tissu, une feuille de non-tissé, un film de matière plastique, une feuille de papier ou analogue.

Un tel matériau offre l'avantage d'être particulièrement léger et de pouvoir être facilement enlevé du boîtier, soit pour être lavé, par exemple en machine s'il s'agit d'un tissu ou d'une feuille de matière plastique, soit pour être purement et simplement remplacé par une feuille neuve. En outre, comme on le verra plus loin, du fait de sa souplesse, les plis de la feuille peuvent se déformer en fonction des pressions respectives du flux d'air neuf AN et du flux d'air vicié AV, pour permettre d'assurer une ouverture ou une fermeture commandée de l'un ou l'autre des passages de fluide 34 et 36, en fonction du mode de fonctionnement souhaité.

Le matériau dont est formée la feuille 30 peut être soit étanche à la vapeur d'eau, soit perméable à la vapeur d'eau afin de restituer une partie de la vapeur d'eau contenue dans l'air évacué. Ceci est intéressant pour maintenir un certain degré d'hygrométrie à l'intérieur du bâtiment.

L'unité 10 de l'invention comprend en outre des moyens de circulation d'air pour assurer une circulation des flux AN et AV. A l'intérieur du conduit 26 est logé un ventilateur d'introduction 38 qui a pour fonction d'introduire à l'intérieur du bâtiment le flux d'air neuf AN prélevé à l'extérieur.

Le flux AN pénètre dans le boîtier 12 et plus particulièrement dans le passage 34. Il se divise entre un flux supérieur ANS et un flux inférieur ANF (figures 1 et 2). Le flux supérieur est un flux ascendant et quitte le boîtier par au moins une ouverture 40 ménagée en partie supérieure, tandis que le flux ANF est un flux descendant et quitte le boîtier par au moins une ouverture 42 prévue en partie inférieure.

Par ailleurs, à l'intérieur du boîtier 12 sont logés deux ventilateurs, à savoir un ventilateur 44 en partie supérieure et un ventilateur 46 en partie inférieure (figure 1). Le ventilateur 44 est disposé en-dessous de la paroi supérieure 16, laquelle est munie d'une ouverture 48 propre à laisser passer de l'air vicié AV. De plus, le ventilateur 46 est placé au-dessus de la paroi inférieure 18, laquelle est munie d'une ouverture 50 propre à laisser passer l'air vicié AV.

Comme on le verra plus loin, l'un et/ou l'autre des ventilateurs 44 et 46 peut être mis en marche. Lorsque le ventilateur 44 est actionné, un flux d'air vicié, ou flux supérieur AVS circule de manière descendante et parvient au conduit 28 pour être évacué vers l'extérieur. Lorsque le ventilateur 46 est actionné, un flux d'air vicié est prélevé en partie inférieure du bâtiment et constitue un flux ascendant ou flux inférieur AVF qui quitte le boîtier par le conduit 28 pour être évacué vers l'extérieur.

Ainsi, dans tous les cas, on réalise un échange de chaleur par circulation à contre-courant entre de l'air neuf prélevé à l'extérieur du bâtiment et de l'air vicié prélevé à l'intérieur du bâtiment, soit en partie supérieure, soit en partie inférieure, soit les deux à la fois.

Les ventilateurs 38, 44 et 46 sont reliés à un tableau de commande 52 représenté schématiquement sur la figure 1, lequel peut être disposé à proximité immédiate du boîtier 12, ou encore intégré à celui-ci.

Ce tableau permet d'assurer la commande sélective des trois ventilateurs en fonction des modes souhaités, soit de façon manuelle, soit de façon automatique, en prenant éventuellement en compte des valeurs de températures à l'intérieur et/ou à l'extérieur du bâtiment.

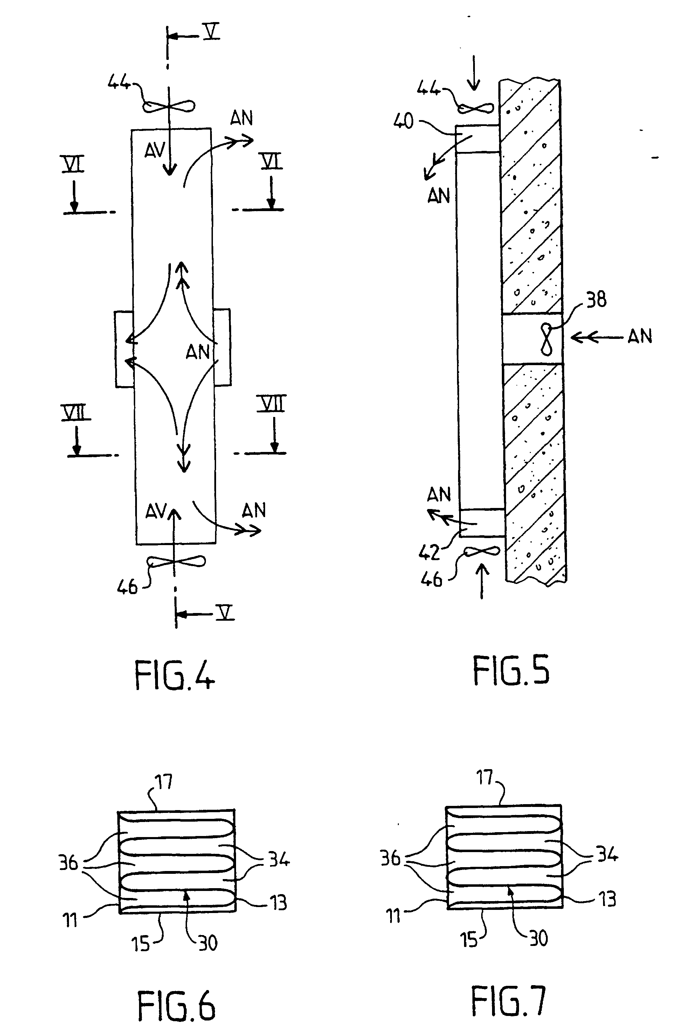

On se réfère maintenant aux figures 4 et 5 qui correspondent aux figures 1 et 2 et représentent schématiquement l'unité 10 dans un mode de fonctionnement avec échange de chaleur. Dans ce mode de fonctionnement, les trois ventilateurs 38, 44 et 46 sont mis en marche. Cela signifie qu'un flux d'air neuf AN prélevé à l'extérieur est introduit dans la pièce en partie supérieure et en partie inférieure, respectivement par les ouvertures 40 et 42 du boîtier. De même, du fait que les ventilateurs 44 et 46 sont actionnés, un flux d'air vicié AV est prélevé en haut et en bas au travers des ouvertures 48 et 50 et est évacué vers l'extérieur du bâtiment par le conduit 28. Du fait que les ventilateurs sont en fonctionnement, les passages de fluide 34 et 36 sont tous deux sous pression et les plis d'ondulation de la feuille 30 délimitent, d'un côté et de l'autre, des canaux ouverts assurant la circulation respective des deux fluides (figures 6 et 7).

Du fait de l'échange de chaleur ainsi réalisé, le flux d'air neuf AN qui est introduit dans la pièce se trouve refroidi ou réchauffé, selon les cas, par échange thermique avec le flux d'air vicié AV qui est prélevé dans le bâtiment et évacué vers l'extérieur.

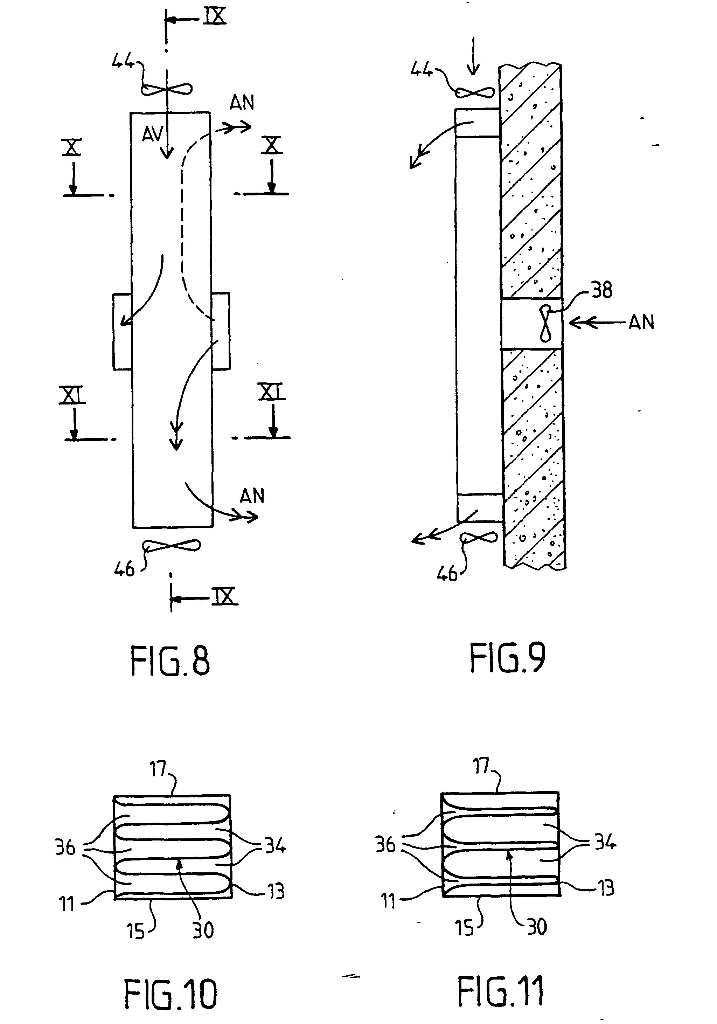

On se réfère maintenant aux figures 8 et 9 qui correspondent aux figures 4 et 5, pour un mode de fonctionnement différent, sans récupération de chaleur.

Dans l'exemple, le ventilateur d'introduction 38 (ventilateur central) est en marche, le ventilateur d'évacuation 44 est également en marche, mais le ventilateur d'évacuation 46 est arrêté, ce qui entraîne un déséquilibre dans le fonctionnement.

I1 en résulte, comme on peut le voir sur les figures 10 et 11, que les plis de la feuille 30 adoptent des configurations différentes, selon que l'on se trouve au-dessus du conduit 20 (voir figure 10) ou au-dessous de ce conduit (voir figure 11).

Dans la position située au-dessus du conduit 20, les deux passages de fluide 34 et 36 sont soumis à une pression, si bien que les canaux correspondants sont ouverts, aussi bien du côté du passage 34 que du côté du passage 36, ce qui assure un faible échange de chaleur entre le flux d'air neuf ascendant ANS et le flux d'air vicié descendant AVS prélevé en partie supérieure.

Par contre, au dessous du conduit 20, du fait que le ventilateur 46 est arrêté, il existe une différence de pression notable entre les passages de fluide 34 et 36. Du fait que le passage 34 est traversé par un flux d'air sous pression, alors que le passage 36 n'est pas traversé par un flux d'air sous pression, les canaux de ce dernier passage se ferment, ce qui empêche l'échange de chaleur. I1 en résulte que pratiquement aucun air vicié n'est prélevé à partir de la partie inférieure du boîtier.

Bien entendu, il est possible de prévoir d'arrêter le ventilateur 44 en partie supérieure et de mettre en marche le ventilateur 46 situé en partie inférieure.

Il est possible également de faire fonctionner les ventilateurs 44 et 46 de manière alternée, tout en maintenant en fonctionnement le ventilateur 38, et cela en fonction du mode de fonctionnement souhaité par l'utilisateur.

Egalement, ce mode de fonctionnement peut être obtenu par un contrôle automatique, par exemple au moyen d'un thermostat.

Ainsi, on comprendra que lorsque les ventilateurs 44 et 46 sont tous deux en marche, il y a échange d'air avec récupération de chaleur. Par contre, si un seul des deux est en marche, il y a échange d'air sans récupération de chaleur.

Lorsque tous les ventilateurs sont en fonctionnement, les canaux délimités de part et d'autre de la feuille sont ouverts sur toute leur longueur et l'air circule normalement des deux côtés de la feuille avec échange de chaleur.

Lorsqu'un seul des ventilateurs d'évacuation est en fonctionnement, il se produit un déséquilibre. Seuls les canaux sous pression sont ouverts, alors que les autres sont aplatis et pratiquement fermés. Le canal ouvert dispose d'une plus large section (pratiquement le double) et débite donc plus. De plus, là où il n'y a pas de double flux, il n'y a pas d'échange de chaleur.

Bien entendu, l'invention n'est pas limitée à la forme de réalisation décrite précédemment à titre d'exemple et s'étend à d'autres variantes.

Ainsi, on comprendra que le boîtier pourrait être disposé dans une position sensiblement horizontale avec ses ventilateurs 44 et 46 placés à la même hauteur.

Egalement, il pourrait être envisagé de réaliser le boîtier en deux parties formant chacune un échangeur de chaleur comprenant une feuille souple et l'un des ventilateurs d'évacuation. En ce cas chaque échangeur de chaleur peut comporter son propre boîtier et comporter son propre ventilateur d'introduction et son propre ventilateur d'évacuation.

## Revendications

1. Unité indépendante d'échange de chaleur propre à être placée à l'intérieur d'un bâtiment et comprenant un boîtier (12) muni de parois (14, 30) délimitant deux passages de fluide ayant une section de forme ondulée, et des moyens de circulation d'air (38, 44, 46) propres à faire circuler à contre-courant dans les deux passages de fluide, d'une part un flux d'air neuf (AN) prélevé à l'extérieur du bâtiment et, d'autre part, un flux d'air vicié (AV) prélevé à l'intérieur du bâtiment, dans laquelle les parois délimitant les passages de fluide comprennent une feuille souple et mince (30) formant des plis (32), ,
**caractérisé en ce que** lesdites parois sont susceptibles de se déformer en fonction des pressions respectives du flux d'air neuf (AN) et du flux d'air vicié (AV),
**en ce que** les moyens de circulation d'air comprennent au moins un ventilateur d'introduction (38) dans l'unité indépendante d'échange de chaleur disposé dans une région centrale du boîtier (12) et propre à introduire à l'intérieur du bâtiment un flux d'air neuf (AN) prélevé à l'extérieur, et deux ventilateurs d'évacuation (44, 46) de l'unité indépendante d'échange de chaleur disposés respectivement dans deux régions d'extrémité du boîtier et propres à évacuer vers l'extérieur du bâtiment un flux d'air vicié provenant de l'intérieur,
et **en ce qu'**elle comprend des moyens de commande (52) propres à assurer sélectivement la mise en marche ou l'arrêt du (des) ventilateurs d'introduction (38) et de l'un et/ou l'autre des ventilateurs d'évacuation (44, 46),
ce qui permet d'assurer un fonctionnement avec échange de chaleur lorsque les deux ventilateurs d'évacuation sont en marche et un fonctionnement sans échange de chaleur lorsque l'un des deux ventilateurs d'évacuation est en marche et l'autre à l'arrêt.

2. Unité selon la revendication 1, **caractérisée en ce que** ladite feuille (30) est réalisée dans un matériau étanche à l'air, tel qu'un tissu, un non-tissé, une matière plastique, du papier et analogues.

3. Unité selon la revendication 2, **caractérisée en ce que** le matériau de la feuille (30). est en outre étanche à la vapeur d'eau.

4. Unité selon la revendication 2, **caractérisée en ce que** le matériau de la feuille (30) est en outre perméable à la vapeur d'eau.

5. Unité selon l'une des revendications 1 à 4, **caractérisée en ce que** le boîtier (12) est de forme générale allongée, et **en ce que** les plis (32) de la feuille souple (30) ont des génératrices sensiblement parallèles et s'étendant dans le sens de la longueur du boîtier.

6. Unité selon la revendication 5, **caractérisée en ce que** le boîtier (12) est disposé verticalement, et **en ce que** les génératrices des plis sont sensiblement verticales.

7. Unité selon l'une des revendications 1 à 6, **caractérisée en ce que** le boîtier est à disposition générale verticale, et **en ce que** les deux ventilateurs d'évacuation (44, 46) sont disposés respectivement en partie supérieure et en partie inférieure du boîtier.

8. Unité selon l'une des revendications 1 à 7, **caractérisée en ce qu'**elle comprend deux échangeurs de chaleur associés respectivement aux deux ventilateurs d'évacuation (44, 46) et comprennent chacun une feuille souple (30).

## Patentansprüche

1. Unabhängige Wärmetauschereinheit, die geeignet ist, im Inneren eines Gebäudes angeordnet zu sein und ein Gehäuse (12), versehen mit Seitenwänden (14, 30), die zwei Fluidkanäle begrenzen, die einen Abschnitt mit welliger Form aufweisen, und Luftzirkulationseinrichtungen (38, 44, 46) aufweist, die geeignet sind, im Gegenstrom in den beiden Fluidkanälen einerseits einen Strom von neuer Luft (AN), der vom Äußeren des Gebäudes abgegriffen wird, und, andererseits, einen Strom von schlechter bzw. verbrauchter Luft (AV), der im Inneren des Gebäudes abgegriffen wird, zirkulieren zu lassen, in der die Seitenwände, die die Fluidkanäle begrenzen, eine biegsame und dünne Folie (30) aufweisen, die Falten (32) bildet,
**dadurch gekennzeichnet, dass** die Seitenwände in der Lage sind, sich in Abhängigkeit der Drücke des neuen Luftstroms (AN) bzw. des verbrauchten Luftstroms (AV) zu verformen,
dass die Einrichtungen zum Luftzirkulieren wenigstens einen Einführventilator (38) in der unabhängigen Wärmetauschereinheit, der in einem zentralen Bereich des Gehäuses (12) angeordnet und in der Lage ist, in das Innere des Gebäudes einen Strom neuer Luft (AN) einzuführen, der außen abgegriffen wird, und zwei Ausbringventilatoren (44, 46) in der unabhängigen Wärmetauschereinheit aufweisen, die in zwei Endbereichen des Gehäuses angeordnet sind und in der Lage sind, einen Strom verbrauchter Luft, der vom Inneren herrührt, nach dem Äußeren des Gebäudes auszubringen,
und dass sie Steuereinrichtungen (52) aufweist, die in der Lage sind, wahlweise das Ingangsetzen oder Anhalten des (der) Einführventitatoren (38) und des einen und/oder des anderen der Ausbringventilatoren (44, 46) sicherzustellen,
was ermöglicht, einen Betrieb mit Wärmetauschen sicherzustellen, wenn die beiden Ausbringventilatoren in Betrieb sind, und einen Betrieb ohne Wärmetausch sicherzustellen, wenn einer der beiden Ausbringventilatoren in Betrieb und der andere außer Betrieb ist.

2. Einheit nach Anspruch 1, **dadurch gekennzeichnet, dass** die Folie (30) aus einem luftdichten Material gebildet ist, wie einem Gewebe, einem Nicht-Gewebe, einem Kunststoffmaterial, Papier oder dergleichen.

3. Einheit nach Anspruch 2, **dadurch gekennzeichnet, dass** das Folienmaterial (30) darüber hinaus gegenüber Wasserdampf dicht ist.

4. Einheit nach Anspruch 2, **dadurch gekennzeichnet, dass** das Folienmaterial (30) darüber hinaus wasserdampfdurchlässig ist.

5. Einheit nach einem der Ansprüche 1 bis 4, **dadurch gekennzeichnet, dass** das Gehäuse (12) von allgemein länglicher Form ist, und dass die Falten (32) der biegsamen Folien (30) Erzeugende aufweisen, die im wesentlichen parallel sind und sich in Richtung der Länge des Gehäuses erstrecken soll.

6. Einheit nach Anspruch 5, **dadurch gekennzeichnet, dass** das Gehäuse (12) vertikal angeordnet ist, und dass die Erzeugenden der Falten sich im wesentlichen vertikal erstrecken.

7. Einheit nach einem der Ansprüche 1 bis 6, **dadurch gekennzeichnet, dass** das Gehäuse allgemein vertikal ausgerichtet ist, und dass die beiden Ausbringventilatoren (44, 46) im oberen bzw. im unteren Abschnitt des Gehäuses angeordnet sind.

8. Einheit nach einem der Ansprüche 1 bis 7, **dadurch gekennzeichnet, dass** sie zwei Wärmetauscher aufweist, die entsprechend mit den beiden Ausbringventilatoren (44, 46) verbunden sind und jeweils eine biegsame Folie (30) aufweisen.

## Claims

1. Independent heat-exchange unit capable of being placed inside a building and comprising a housing (12) equipped with walls (14, 30) defining two passages for fluid having an undulating cross-section, and comprising means for the circulation of air (38, 44, 46) capable of making circulate in contra-flow in the two passages for fluid on the one hand a flow of fresh air (AN) taken from the outside of the building and on the other hand a flow of stale air (AV) taken from inside the building, wherein the watts defining the passages for fluid comprise a thin flexible foil forming folds (32),
**characterised in that** the walls are capable of deforming according to the respective pressures of the flow of fresh air (AN) and the flow of stale air (AV),
**in that** the means for the circulation of air comprise at least one intake fan (38) in the independent heat-exchange unit, the fan being disposed in a central region of the housing (12) and being capable of drawing a flow of fresh air (AN) from the outside into the building, and two evacuation fans (44, 46) of the independent heat-exchange unit disposed respectively in two end regions of the housing and being capable of evacuating to the outside of the building a flow of stale air coming from the inside,
and **in that** it comprises control means (52) capable of ensuring selectively the starting up or stopping of the intake fan(s) (38) and of one and/or the other of the evacuation fans (44, 46),
which makes it possible to ensure operation with heat exchange when the two evacuation fans are in operation and operation without heat exchange when one of the two evacuation fans is in operation and the other is stationary.

2. Unit according to claim 1, **characterised in that** the foil (30) is formed from a material which is air-tight, such as a woven fabric, a non-woven fabric, a plastics material, paper or the like.

3. Unit according to claim 2, **characterised in that** the material of the foil (30) is furthermore sealing-tight to water vapour.

4. Unit according to claim 2, **characterised in that** the material of the foil (30) is furthermore permeable to water vapour.

5. Unit according to one of claims 1 to 4, **characterised in that** the housing (12) is of general elongate shape, and **in that** the folds (32) of the flexible foil (30) have generatrices which are substantially parallel and which extend in the direction of the length of the housing.

6. Unit according to claim 5, **characterised in that** the housing (12) is disposed vertically, and **in that** the generatrices of the folds are substantially vertical.

7. Unit according to one of claims 1 to 6, **characterised in that** the housing has a generally vertical disposition, and **in that** the two evacuation fans (44, 46) are disposed respectively in the upper part and in the lower part of the housing.

8. Unit according to one of claims 1 to 7, **characterised in that** it comprises two heat exchangers respectively associated with the two evacuation fans (44, 46) and each comprising a flexible foil (30).
